# EUROPEAN PATENT SPECIFICATION

(11) **EP 0 364 603 B1**
(45) Date of publication and mention of the grant of the patent: **02.06.1993**
(21) Application number: 89904218.8
(22) Date of filing: 31.03.1989
(51) Int. Cl.: F16K 31/44

(54) **HYDRAULIC PILOT VALVE**
HYDRAULISCHES PILOTVENTIL
SOUPAPE PILOTE HYDRAULIQUE

(30) Priority: 31.03.1988 JP 76298/88
(43) Date of publication of application: 25.04.1990
(73) Proprietor: KABUSHIKI KAISHA KOMATSU SEISAKUSHO, Minato-ku Tokyo 107 (JP)
(72) Inventor: HORI, Shyuji 477, Miyauchi, Kawasaki-shi Kanagawa-ken 211 (JP); MARUYAMA, Jun, Yokohama-shi Kanagawa-ken 240 (JP)
(74) Representative: TER MEER STEINMEISTER & PARTNER GbR
(86) International application number: PCT/JP89/00339
(87) International publication number: WO 89/09360

(56) References cited:
- JP-A- 5 939 379
- JP-U- 5 939 379
- JP-U-54 100 225

## Description

The invention relates to a hydraulic pilot valve comprising
- a valve body,
- valve spools mounted slidably in a plurality of axially extending valve holes formed within the valve body and along the circumferential of the latter, said valve spool being slidably movable freely between a first position where pilot pressurized fluid outlet ports formed on one side of the valve body and continuously with the valve holes, respectively, may communicate with an inlet port formed in said valve body so that the outlet ports may communicate with a pilot pressurized fluid supply pump, and a second position where said outlet ports may communicate with a fluid reservoir port so that the outlet ports may communicate with a fluid reservoir,
- a plurality of pistons mounted axially slidably in the valve body on the other side thereof and arranged such that they may be aligned with said valve spools and their respective leading ends may project from the valve body,
- an operating lever connected with a pusher member, which is kept in contact with the projecting leading end of each of the pistons and adapted to move the pusher membe down towards said pistons when it is tilted manually by the operator,
- first compression springs each being mounted between the valve body and each of the pistons so as to bias normally each of the piston towards said pusher member, and
- second compression springs each being mounted between the piston and the valve spoon so that movement of each of said pistons by the operating lever in one direction may cause movement of each of said valve spools to the first position.

The invention particularly refers to a hydraulic pilot valve for supplying pilot fluid under pressure into a pilot fluid actuated type switch-over valve or the like adapted to be actuated for switch-over by pilot fluid under pressure, and more particularly to a hydraulic pilot valve arranged to control the discharge rate of pilot fluid under pressure in proportion to the stroke of an operating lever.

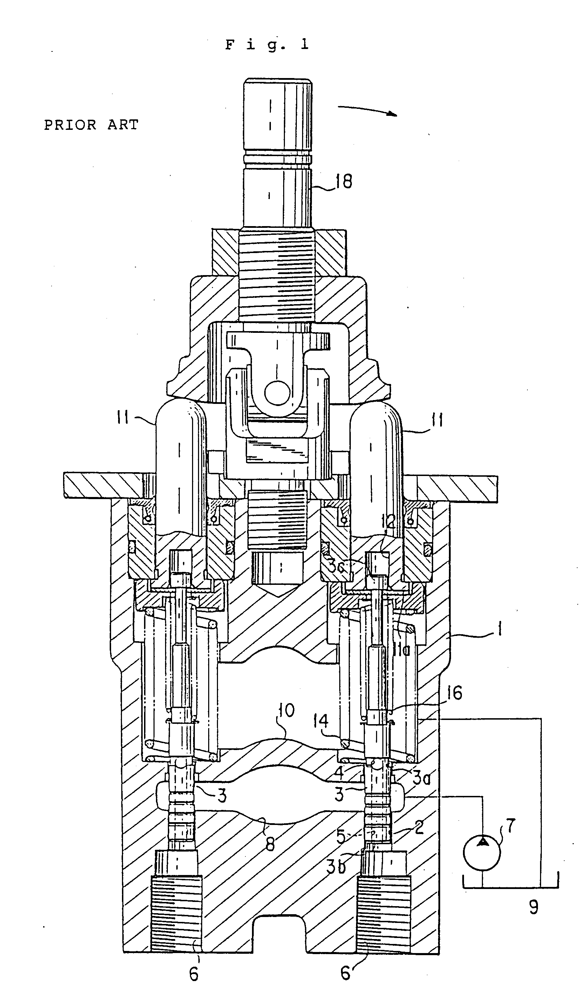

From JP-A-59 39 379, there is known a conventional hydraulic pilot valve of the kind specified above as shown, for example, in Fig. 1.

Stating in brief, this valve has a valve body 1 having a plurality of axially extending valve holes 2 formed within the valve body 1 along the circumference of the latter, and a valve spool 3 slidably mounted in each of these valve holes 2. Each of the valve spools 3 has formed therein a radial hole 4 for pressurized fluid which opens in a small diameter portion 3a formed on the approximately intermediate axial portion therof, and an axial hole 5 for pressurized fluid, one end of which communicates with the radial hole 4 and the other end of which opens in the base end surface 3b of the valve spool.

The valve body 1 has further formed axially in turn therein pilot pressurized fluid outlet ports 6, an inlet port 8, and a reservoir port 10, all of which are communicated with each other through the valve holes 2. The inlet port 8 communicates with a pilot pressurized fluid supply pump 7, and the reservoir port 10 communicates with a fluid reservoir 9.

Pistons 11 are axially slidably mounted in the upper part of the valve body 1 at positions opposite to the valve spools 3 which are inserted in the above-mentioned plurality of valve holes 22, respectively. The upper end of each of the pistons 11 is biased against and kept in contact with the lower end surface of a pusher member 20 projecting from the valve body 1 and which is connected to an operating lever 18, by the resiliency of a spring 16.

Each valve spool 3 is slidably inserted in each of the valve holes 2 in such a manner that the base end surface 3b thereof faces the corresponding outlet port 6, and the leading end portion 3c thereof is fitted in a blind hole 12 formed in the base end of each of the pistons 11. The arrangement is made such that when the operating lever 18 is tilted in the direction shown by arrow each of the valve spools 3 is allowed to slidably move down in the drawing through the respective piston 11 and spring 16 against the resilient force of a spring 14.

The downward sliding movement of the valve spools 3 allows the pilot fluid under pressure which is supplied by the pump 7 into the inlet port 7 to flow through the holes 4 and 5 formed in each of the valve spools 3 into the respective outlet port 6.

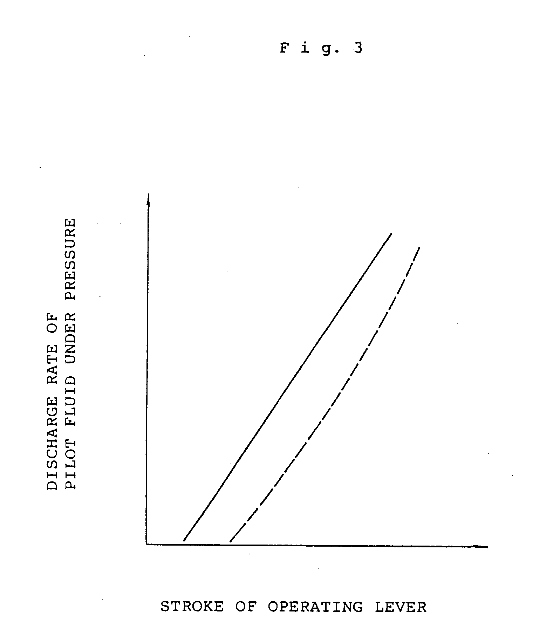

The discharge rate of the pilot fluid under pressure which is allowed to flow into the outlet ports 6 is usually controlled in such a way as to increase in proportion to the stroke of the operating lever as shown, for example, by solid line in Fig. 3. Whilst, in the above-mentioned prior art hydraulic pilot valve unit, when the operating lever 18 is tilted, the valve spools 3 are slidably moved down in the same manner through the springs 16 in accordance with the movement downward sliding movement in the drawing) of the pistons 11. Therefore, when the operating lever 18 is tilted suddenly, the pistons 11 are slidably moved down quickly so as to deflect the springs 16 quickly. However, because of the weak resilient force of the springs 16, the deflection thereof will not provide momentarily a force to depress the valve spools 3 so that there is a time delay until the downward sliding movement of the valve spools 3 occurs. As a result, the relationship between the stroke of the operating lever 18 and the discharge rate of the pilot fluid under pressure will become as shown by dotted line in Fig. 3.

In brief, changes in the operating speed of the operating lever 18 result in changes in the discharge rate of pilot fluid under pressure relative to the stroke of the operating lever. When operating an implement of a hydraulic actuator or the like adapted to be operationally controlled by a pilot fluid actuated type change-over valve, etc. incorporating such a hydraulic pilot valve unit, it becomes difficult for the operator to manipulate the work implement of the construction vehicle to his will.

### SUMMARY OF THE INVENTION

The present invention has been made in view of the above-mentioned circumstances, and has for its object to provide a hydraulic pilot valve unit wherein valve spools for controlling the discharge rate of pilot fluid under pressure are moved accurately in accordance with the operation of an operating lever, and the discharge rate of pilot fluid under pressure can be varied in proportion to the stroke of the operating lever irrespective of the operating speed of the operating lever.

According to the invention, the above-mentioned object is achieved by a hydraulic pilot valve of the above kind, characterized by
- damper pistons each being mounted slidably in a cylinder hole formed in each of the pistons on the opposite side of the pusher member so as to extend axially from the base end face of each of the pistons, thereby defining a damper chambe in the cylinder hole,
- damper orificies each being formed in each of the damper pistons so as to allow the damper chambers to communicate with the damper pistons fluid reservoir port formed in the valve body, and
- third compression springs each being mounted between each of the damper pistons and the innermost walls of each of the cylinder holes, the arrangement being made such that each of the damper pistons is abutted against one end of each of the valve spools by the resilient force of said third compression springs so as to block each of the damper orificies.

The hydraulic pilot valve unit incorporating the above-mentioned aspect has the following advantages.

Even when the operating lever is manipulated suddenly by the operator, the damper pistons are moved together with the pistons by a damper effect created in the damper chambers thereby moving the valve spools so that the latter may be moved without any time delay, and hence the discharge rate of pilot fluid under pressure may be varied in proportion to the strike of the operating lever.

Further, even when the operating lever is manipulated by the operator in the opposite direction from the condition that the valve spools have been moved down in the drawing thereby moving the pistons to their inoperative condition, the damper pistons are each kept continuously in contact with one end face of each of the valve spools so that the damper orifices may be kept closed. Subsequently, when the pistons are moved again by means of the operating lever, a damper effect is created in the damper chambers so that the valve spools may be moved smoothly to their second positions without any time delay in the same manner as mentioned above.

Thus, in operating an implement actuated by a pilot fluid actuated type changeover valve or the like adapted to be controlled for switch-over by the hydraulic pilot valve unit according to the present invention, it becomes possible for the operator to manipulate the implement easily and to his will.

The above-mentioned and other objects, aspects and advantages of the present invention will become apparent to those skilled in the art by making reference to the following detailed description and accompanying drawings in which a preferred embodiment incorporating the principles of the present invention is shown by way of example only.

### BRIEF DESCRIPTION OF THE DRAWINGS

Fig. 1 is a longitudinal sectional view of an embodiment of the conventional hydraulic pilot valve unit;
Fig. 2 is a longitudinal sectional view of an embodiment of the present invention;
Fig. 3 is a graph showing the relationship between the stroke of the operating lever and the discharge rate of pilot fluid under pressure; and
Figs. 4A to 4E are longitudinal sectional views showing various examples of the damper piston.

### DETAILED DESCRIPTION OF PREFERRED EMBODIMENT

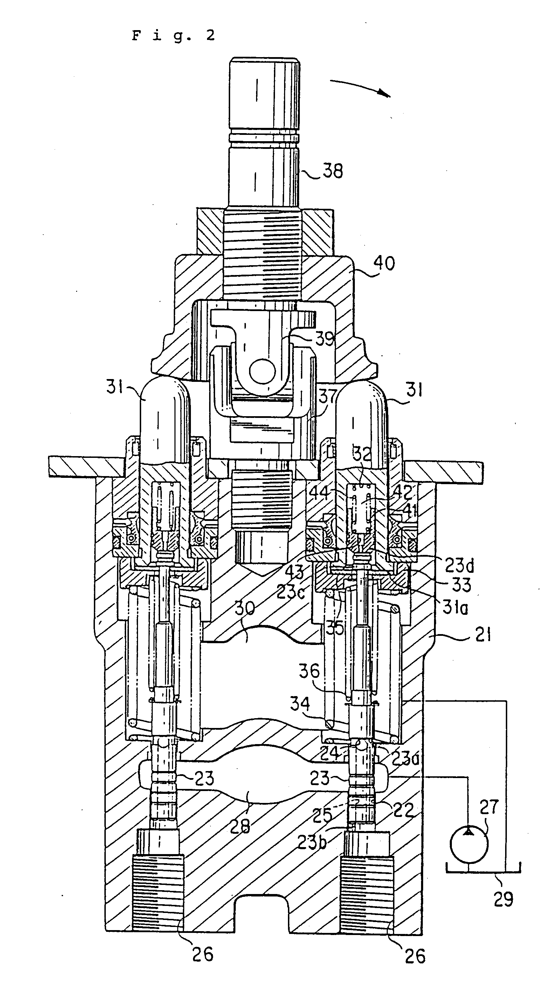

The present invention will now be described below by way of example only with reference to Figs. 2 to 4E.

Referring to Fig. 2, the hydraulic pilot valve unit comprises a valve body 21 having a plurality of axially extending valve holes 22 formed within the valve body in the circumferential direction thereof, and a valve spool 23 is slidably mounted in each of the valve holes 22. Each of the valve spools 23 has formed therein a radial hole 24 for pressurized fluid which opens in a small diameter portion 23a formed on the approximately intermediate axial portion thereof, and an axial hole 25 for pressurized fluid, one end of which communicates with the radial hole 24 and the other end of which opens in the base end surface of the valve spool.

The valve body 21 has further formed axially in turn therein pilot pressurized fluid outlet ports 26, an inlet port 28 and a reservoir port 30, all of which are communicated with each other through the valve holes 22. The inlet port 28 communicates with a pilot pressurized fluid supply pump 27, and the reservoir port 30 communicates with a fluid reservoir 29.

Pistons 31 are axially slidably mounted in the upper part of the valve body 21 at positions opposite to the valve spools 23 which are inserted in the above-mentioned valve holes 22, respectively. The upper end of each of the pistons 31 is biased against and kept in contact with the lower end surface of a pusher member 40 projecting from the valve body 21 and which is connected to an operating lever 38, by the resiliency of a first compression spring 34.

Each valve spool 23 is slidably inserted in each of the valve holes 22 in such a manner that the base end face 23b thereof faces the corresponding outlet port 26, and the leading end portion 23c thereof is fitted in a blind hole 32 formed in the base end 31a of each of the pistons 31. The arrangement is made such that when the operating lever 38 is tilted in the direction shown by arrow each of the valve spools 23 is allowed to slidably move down in the drawing to a first position through the respective piston 31 and first compression spring 34 end against the resilient force of a second compression spring 36. Further, each of the first springs 34 is mounted between a spring retainer 33 of the piston 31 and the valve body 1 so as to bias normally each of the pistons 31 towards the pusher member 40.

As a result of the downward sliding movement of the valve spools 23, the pilot fluid under pressure which is supplied by the pump 27 into the inlet port 28 is allowed to flow through the holes 24 and 25 formed in each of the valve spools 23 into the respective outlet port 26.

Each of the above-mentioned pistons 31 has a cylinder hole 32 formed therein in the shape of a blind hole and which is perforated to open into the reservoir port 30. A damper piston 41 is inserted in the cylinder hole 32 so as to define a damper chamber 42. The damper piston 21 has a narrow axially extending passage (or damper orifice) 43 formed in the approximately central part thereof so that the damper chamber 42 may be communicated with the reservoir port 30. Since the damper piston 41 is normally biased outwardly by a third compression spring 44 mounted within the damper chamber so as to abut against the leading end face of the valve spool 23, the damper orifice 43 is normally blocked by the leading end face 23d.

Further, one end face 31a of the piston 31 is abutted through a spring retainer 33 and a spacer 35 located thereunder against a first compression spring 34. A second compression spring 36 is moutned between the spring retainer 33 and a shoulder formed in the intermediate portion of the valve spool 23 so as to bias the valve spool 23 to a predetermined position so that the leading end 23c thereof may be abutted against the spacer 35 thereby holding the valve spool 23 at a second position; that is; a draining position, where the inlet port 28 is communicated through the holes 25 and 24 with the reservoir port 30. The above-mentioned valve body 21 has a mounting rod 37 screwed in the upper part thereof. an operating lever 38 is connected through a cross joint 39 to the mounting rod 37 so that it may be swung freely to the front and rear and to the left and right. A pusher member 40 mounted on the cross joint 39 is abutted against the above-mentioned pistons 31. When the operating lever 38 is swung or tilted in the direction shown by arrow, to urge each of the pistons 31 down in drawing to thereby move the spring retainer 33 down against the resiliency of the first compression spring 34, each of the valve spools 23 is moved down by the piston 31 and the damper piston 41 to the above-mentioned first position underneath. As a result, the holes 24 formed in the valve spools 23 will communicate with the inlet port 28 so that the pilot fluid under pressure in the inlet port 28 may be supplied through the holes 24 and 25 into the outlet ports 26.

Thus, in the hydraulic pilot valve unit constructed as mentioned hereinabove, even when the operating lever 38 is operated quickly, owing to the damper effect developed in the damper chambers 42, the valve spools 23 are moved down by the combined action of their damper pistons 41 and pistons 31. Therefore, movement of the valve spools 23 can be made without time delay inherent to the prior art pilot valve unit. As a result, as shown by solid line in Fig. 3, pilot fluid under pressure is discharged from the outlet ports 26 in proportion to the stroke of the operating lever, irrespective of the speed of operation of the operating lever 38.

Further, when the operating lever 38 is operated reversely from the condition that it has been operated in the direction shown by arrow with the valve spools 23 assuming their lower positions, the pistons 31 are moved upwards by the resilient force of their first compression springs 34 so that there is a tendency of creating a clearance between the damper piston 41 and the leading end face 23d of the value spool 23. However, since each of the damper pistons 41 is biased downwardly in the drawing by a third compression spring 34, the damper piston 41 is still kept in contact with the leading end face 23d of the valve spool 23 to thereby close the damper orifice 43. Therefore, when the operating lever 38 is operated again in the direction shown by arrow, the damper effect can be obtained.

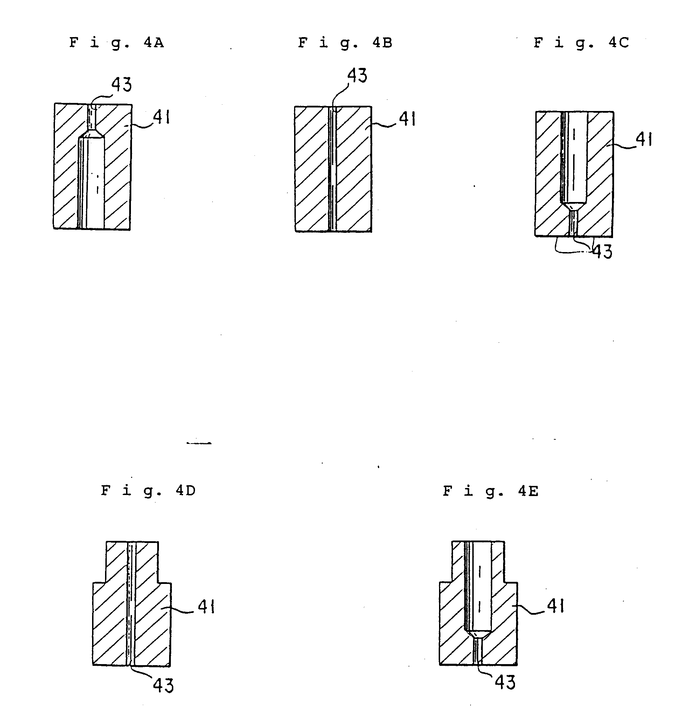

The above-mentioned damper piston 41 may be formed in any of shapes as shown in Figs. 4A to 4E. In brief, it is only necessary to form the piston 41 in such a manner that the damper orifice 43 can be blocked or closed by the leading end face of the valve spool 23.

Further, it is also possible to change the diameter of the damper orifice 43 to thereby regulate the damper effect so that the discharge rate of pilot fluid under pressure can be varied in accordance with the speed of operation of the operating lever 38.

Further, since the damper piston 41 is urged by the resiliency of the third compression spring 44 against one end face of the valve spool 23, the damper piston may be arranged to slidably move in the horizontal direction in the drawing, and hence the piston 31 and the valve spool 23 may be arranged to slidably move in the horizontal direction.

## Claims

1. Hydraulic pilot valve comprising
- a valve body (21),
- valve spools (23) mounted slidably in a plurality of axially extending valve holes (22) formed within the valve body (21) and along the circumferential of the latter, each said valve spool (23) being slidably movable freely between a first position where pilot pressurized fluid outlet ports (26) formed on one side of the valve body (21) and continuously with the valve holes (22), respectively, may communicate with an inlet port (28) formed in said valve body (21) so that the outlet ports (26) may communicate with a pilot pressurized fluid supply pump (27), and a second position where said outlet ports (26) may communicate with a fluid reservoir port (30) so that the outlet ports (26) may communicate with a fluid reservoir (29),
- a plurality of pistons (31) mounted axially slidably in the valve body (21) on the other side thereof and arranged such that they are aligned with said valve spools (23) and their respective leading ends project from the valve body (21),
- an operating lever (38) connected with a pusher member (40), which is kept in contact with the projecting leading end of each of the pistons (31), and adapted to move the pusher member (40) down towards said pistons (31) when it is tilted manually by the operator,
- first compression springs (34) each being mounted between the valve body (21) and each of the pistons (31) so as to bias normally each of the pistons (31) towards said pusher member (40), and
- second compression springs (36) each being mounted between the piston (31) and the valve spool (23) so that movement of each of said pistons (31) by the operating lever (38) in one direction may cause movement of each of said valve spools (23) to the first position,
**characterized** by
- damper pistons (41) each being mounted slidably in a cylinder hole (32) formed in each of the pistons (31) on the opposite side of the pusher member (40) so as to extend axially from the base end face (31a) of each of the pistons (31), thereby defining a damper chamber (42) in the cylinder hole (32),
- damper orificies (43) each being formed in each of the damper pistons (41) so as to allow the damper chambers (42) to communicate with the fluid reservoir port (30) formed in the valve body (21), and
- third compression springs (44) each being mounted between each of the damper pistons (41) and the innermost walls of each of the cylinder holes (32),
the arrangement being made such that each of the damper pistons (41) is abutted against one end (23d) of each of the valve spools (23) by the resilient force of said third compression springs (44) so as to normally block each of the damper orificies (43).

## Patentansprüche

1. Hydraulisches Steuerventil mit
- einem Ventilgehäuse (21),
- Ventilkörpern (23), die gleitend in einer Anzahl von axial verlaufenden Ventilbohrungen (22) innerhalb des Ventilgehäuses (21) entlang dem Umfang des Gehäuses angeordnet sind, wobei jeder Ventilkörper (23) gleitend frei beweglich ist zwischen einer ersten Position, in der Steuer-Druckfluid Auslässe (26) auf einer Seite des Ventilgehäuses (21) in kontinuierlicher Verbindung mit den Ventilbohrungen (22) mit einem Einlaß (28) in dem Ventilgehäuse (21) in Verbindung stehen, so daß die Auslässe (26) mit einer Steuer-Druckfluid-Zufuhrpumpe (27) in Verbindung treten, und einer zweiten Position, in der die Auslässe (26) mit einer Fluidbehälteröffnung (30) verbunden sind, so daß die Auslässe (26) mit einem Fluidbehälter (29) in Verbindung stehen,
- einer Anzahl von Kolben (31), die axial gleitend in dem Ventilgehäuse (21) auf dessen anderer Seite montiert und derart angeordnet sind, daß sie mit den Ventilkörpern (23) ausgerichtet sind, und deren jeweilige vorauslaufende Enden aus dem Ventilgehäuse (21) herausragen,
- einem Betätigungshebel (38) in Verbindung mit einem Schubglied (40), das in Berührung gehalten wird mit dem vorauslaufenden, austretenden Ende jedes der Kolben (31), und der das Schubglied (40) nach unten in Richtung der Kolben (31) bewegt, wenn er manuell durch den Bedienungsmann gekippt wird,
- ersten Druckfedern (34) zwischen dem Ventilgehäuse (21) und jedem der Kolben (31) zum Vorspannen der Kolben (31) in Richtung des Schubgliedes (40) und
- zweiten Druckfedern (36) zwischen dem Kolben (31) und dem Ventilkörper (23), so daß die Bewegung der Kolben (31) durch den Betätigungshebel (38) in eine Richtung eine Bewegung jedes Ventilkörpers (23) in die erste Position hervorruft,
- **gekennzeichnet** durch
- Dämpfungskolben (41), die gleitend in einer Zylinderbohrung (32) in jedem der Kolben (31) auf der dem Schubglied (40) gegenüberliegenden Seite angeordnet sind und sich in Axialrichtung von der Endfläche (31a) jedes Kolbens (31) erstrecken und eine Dämpfungskammer (42) in der Zylinderbohrung (32) bilden,
- Dämpfungsbohrungen (43) in jedem der Dämpfungskolben (41), die die Dämpfungskammern (42) mit der Fluidbehälter-Öffnung (30) in dem Ventilgehäuse (21) in Verbindung setzen und
- dritten Druckfedern (44) zwischen den Dämpfungskolben (41) und der inneren Wand der Zylinderbohrungen (32),
wobei die Anordnung derart ist, daß jeder Dämpfungskolben (41) gegen ein Ende (23d) jedes Ventilkörpers (23) durch die Federkraft der dritten Druckfedern (44) angedrückt wird, so daß normalerweise die Dämpfungsöffnungen (43) blockiert sind.

## Revendications

1. Soupape-pilote hydraulique comprenant :
- un corps de soupape (21),
- des tiroirs de soupape (23) montés d'une manière coulissante dans plusieurs alésages de soupape (22) ménagés axialement dans le corps de soupape (21) le long de la périphérie de ce dernier, chaque tiroir de soupape (23) étant mobile librement d'une manière coulissante entre une première position, dans laquelle des orifices de sortie de fluide-pilote sous pression (26) ménagés d'un côté du corps de soupape (21) et situés respectivement dans le prolongement des alésages de soupape (22) peuvent communiquer avec un orifice d'entrée (28) ménagé dans le corps de soupape (21) de façon telle que ces orifices de sortie (26) puissent communiquer avec une pompe d'alimentation en fluide-pilote sous pression (27), et une seconde position dans laquelle les orifices de sortie (26) peuvent communiquer avec un orifice de réservoir de fluide (30) de façon telle que ces orifices de sortie (26) puissent communiquer avec un réservoir de fluide (29),
- plusieurs pistons principaux (31) montés axialement d'une manière coulissante dans le corps de soupape (21) de l'autre côté de ce dernier et agencés de façon telle qu'ils soient alignés avec les tiroirs de soupape (23) et que leurs extrémités avant respectives fassent saillie par rapport au corps de soupape (21),
- un levier d'actionnement (38) qui est relié à un élément-poussoir (40) maintenu au contact de l'extrémité avant, en saillie, de chacun des pistons (31) et qui est agencé de façon à déplacer l'élément-poussoir (40) vers le bas, en direction des pistons (31), lorsqu'il est incliné à la main par l'opérateur,
- des premiers ressorts de compression (34) montés entre le corps de soupape (21) et chacun des pistons principaux (31), de façon à normalement repousser élastiquement chacun des pistons (31) vers l'élément-poussoir (40), et
- des deuxièmes ressorts de compression (36) montés entre un piston principal (31) et chacun des tiroirs de soupape (23), de façon telle qu'un déplacement de chacun des pistons (31) dans un sens au moyen du levier d'actionnement (38) puisse provoquer un déplacement de chacun des tiroirs de soupape (23) vers la première position,
caractérisée par :
- des pistons d'amortissement (41) dont chacun est monté coulissant dans un alésage cylindrique (32) ménagé dans l'un, associé, des pistons (31) du côté opposé à l'élément-poussoir (40) de façon à s'étendre axialement à partir de la face extrême de base (31a) de chacun des pistons (31), en délimitant ainsi une chambre d'amortissement (42) dans l'alésage cylindrique (32),
- des orifices d'amortissement (43) ménagés dans chacun des pistons d'amortissement (41) de façon à permettre aux chambres d'amortissement (42) de communiquer avec l'orifice de réservoir de fluide (30) ménagé dans le corps de soupape (21) et
- des troisièmes ressorts de compression (44) montés respectivement entre chacun des pistons d'amortissement (41) et la paroi la plus intérieure de l'alésage cylindrique (32) associé,
l'agencement étant réalisé de façon telle que chacun des pistons d'amortissement (41) vienne en butée contre l'une (23d) des extrémités du tiroir de soupape (23) associé, sous l'effet de la force élastique du troisième ressort de compression (44) associé, de façon à bloquer normalement l'orifice d'amortissement (43) associé.
